# DEMANDE DE BREVET EUROPEEN

(11) **EP 0 725 297 A1**
(43) Date de publication de la demande: **07.08.1996**
(21) Numéro de dépôt: 96400178.8
(22) Date de dépôt: 25.01.1996
(51) Int. Cl.: G02B 27/22

(54) **Procédé et dispositif de génération d'images à vision stéréoscopique**

(30) Priorité: 01.02.1995 FR 9501156
(71) Demandeur: SOCIETE EUROPEENNE DE SYSTEMES OPTIQUES S.E.S.O., F-13792 Aix-en-Provence Cedex 3 (FR)
(72) Inventeur: Ferme, Jean-Jacques, F-13880 Velaux (FR)
(74) Mandataire: Ramey, Daniel

(57) **Abrégé**

Procédé et dispositif de génération d'images à vision stéréoscopique, pour un observateur dont les yeux (16) sont placés en une zone déterminée (14), au moyen de sources lumineuses distinctes (10a, 10b) qui éclairent des vues formées sur des surfaces transmissives (22a, 22b) et d'objectifs (12a, 12b) qui forment des images desdites sources (10a, 10b) sur les emplacements des yeux (16) de l'observateur dans la zone (14).

L'invention s'applique notamment aux systèmes de CAO ou analogues, au télé-pilotage et à la télé-manipulation.

## Description

L'invention concerne un procédé et un dispositif de génération d'images visibles en stéréoscopie par un observateur se trouvant en une zone déterminée.

On sait qu'on peut percevoir un relief à partir d'images bidimensionnelles en utilisant soit des lunettes spéciales pour observer des images prises avec des filtres colorés, soit des appareils stéréoscopiques équipés de moyens de vision binoculaire.

Ces moyens connus ne sont en général pas adaptés à l'observation d'objets mobiles ou de scènes changeantes et sont assez simples et peu fiables, ou très sophistiqués et très coûteux.

L'invention a pour objet un procédé et un dispositif de génération d'images à vision stéréoscopique, qui sont fiables, peu complexes et peu coûteux, et d'utilisation particulièrement simple et commode pour l'observateur.

Elle a également pour objet un procédé et un dispositif de ce type qui peuvent être utilisés pour des commandes à distance d'objets mobiles, par exemple pour le télé-pilotage d'engins automobiles, et pour la télé-manipulation d'outils ou d'objets par exemple lourds, dangereux, lointains, etc.

Elle propose donc un procédé de génération d'images à vision stéréoscopique pour un observateur placé en une zone déterminée, à partir de vues d'un même objet ou d'une même scène prises sous des angles différents, caractérisé en ce qu'il consiste à former lesdites vues sur des surfaces transmissives ou réflectrices, mais non émissives, à les éclairer par des sources lumineuses distinctes et à former des images de ces sources en des emplacements possibles des yeux de l'observateur quand celui-ci se trouve dans la zone précitée, les images des sources étant décalées aux emplacements précités de sorte qu'une image d'une vue éclairée par une source est formée sur un oeil de l'observateur et qu'une image d'une autre vue éclairée par une autre source est formée sur l'autre oeil de l'observateur.

Ainsi, l'observateur placé dans la zone prédéterminée voit par un oeil une seule image éclairée par l'une des sources et par l'autre oeil une autre image éclairée par une autre source, ce qui génère une vision en relief quand les images formées sur les yeux de l'observateur ont été prises ou générées dans des conditions appropriées de décalage spatial les unes par rapport aux autres.

Dans une première forme de réalisation de l'invention, on peut utiliser différentes sources lumineuses pour éclairer des vues précitées, les images de ces sources étant formées distinctement les unes des autres en divers emplacements possibles des yeux de l'observateur.

Dans une autre forme de réalisation, on peut utiliser une seule source lumineuse et partager le faisceau lumineux émis par cette source en plusieurs faisceaux distincts les uns des autres pour éclairer les vues précitées.

Selon les applications de l'invention, ces vues peuvent être générées à partir de données enregistrées dans un système de traitement de l'information (utilisation de l'invention dans un système de CAO par exemple) ou bien elles peuvent être générées par des caméras vidéo visant la même scène (cas du télé-pilotage ou de la télé-manipulation).

L'invention propose également un dispositif pour générer des images à vision stéréoscopique pour un observateur placé en une zone déterminée, à partir de vues d'un même objet ou d'une même scène prises sous des angles différents, caractérisé en ce qu'il comprend au moins deux systèmes optiques identiques de formation d'images desdites vues en des emplacements possibles des yeux de l'observateur quand celui-ci est dans la zone précitée, ces systèmes optiques ayant des axes d'orientation différente et comprenant chacun une source lumineuse, un objectif d'imagerie de la source en un emplacement possible d'un oeil de l'observateur et une surface transmissive ou réflectrice, mais non émissive, associée à l'objectif et sur laquelle est formée une vue précitée, ce dispositif comprenant également une lame semi-transparente qui est placée entre lesdits systèmes optiques et les emplacements précités des yeux de l'observateur, dans la zone d'intersection des axes des systèmes optiques pour être traversée par le flux lumineux provenant de l'un des ces systèmes et réfléchir le flux lumineux provenant de l'autre système.

Dans une forme de réalisation préférée de ce dispositif, les surfaces sur lesquelles sont formées les vues sont des écrans à cristaux liquides, et le dispositif comprend des moyens informatiques permettant de générer, calculer et traiter les vues précitées.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en élévation d'un dispositif selon l'invention,
- la figure 2 est une vue schématique de dessus de ce dispositif,
- la figure 3 illustre schématiquement une variante de réalisation de ce dispositif,
- la figure 4 représente schématiquement des moyens de prise de vues utilisables avec un dispositif selon l'invention.

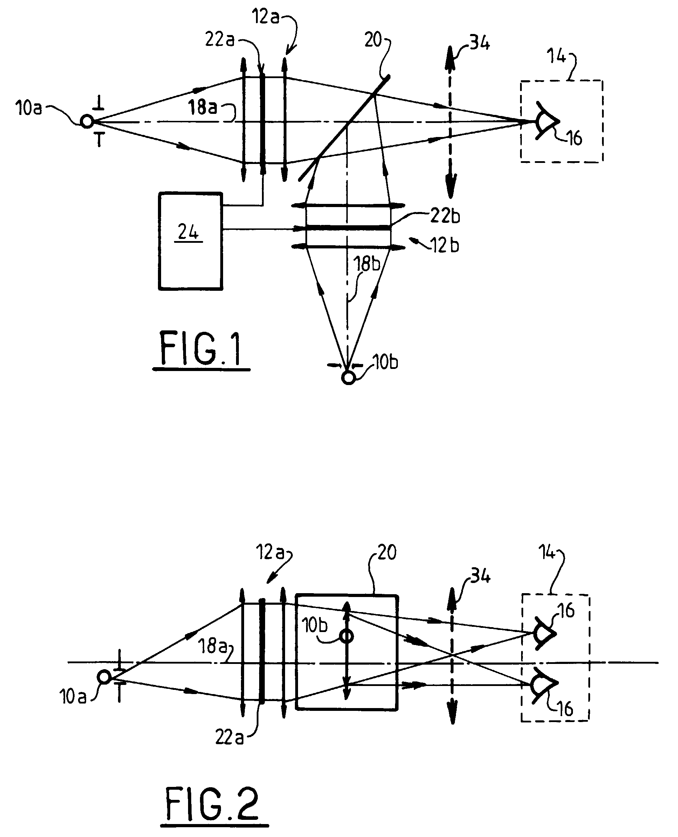

Le dispositif représenté aux figures 1 et 2 comprend deux sources lumineuses 10a et 10b chacune associée à un objectif 12a, 12b qui forme une image de la source lumineuse correspondante sur une zone 14 qui contient les emplacements auxquels doivent se trouver les yeux 16 d'un observateur.

Les axes 18a, 18b des systèmes optiques formés par les sources 10a, 10b et les objectifs associés 12a, 12b, sont sensiblement perpendiculaires dans l'exemple représenté et se coupent en un point où est placée une lame semi-transparente 20 inclinée à 45° sur l'axe 18a du premier système optique pour être traversée par le flux lumineux émis par la source 10a et passant par l'objectif 12a et pour réfléchir le flux lumineux émis par la source 10b et passant par l'objectif 12b, en direction de la zone 14 précitée.

Comme on le voit bien en figure 2, la source 10a est décalée transversalement par rapport à l'axe optique 18a du premier système optique, et son image est formée sur un oeil seulement de l'observateur dans la zone 14 et, de même, la source lumineuse 10b est décalée transversalement par rapport à l'axe optique 18b du second système optique et son image n'est formée que sur l'autre oeil de l'observateur dans la zone 14.

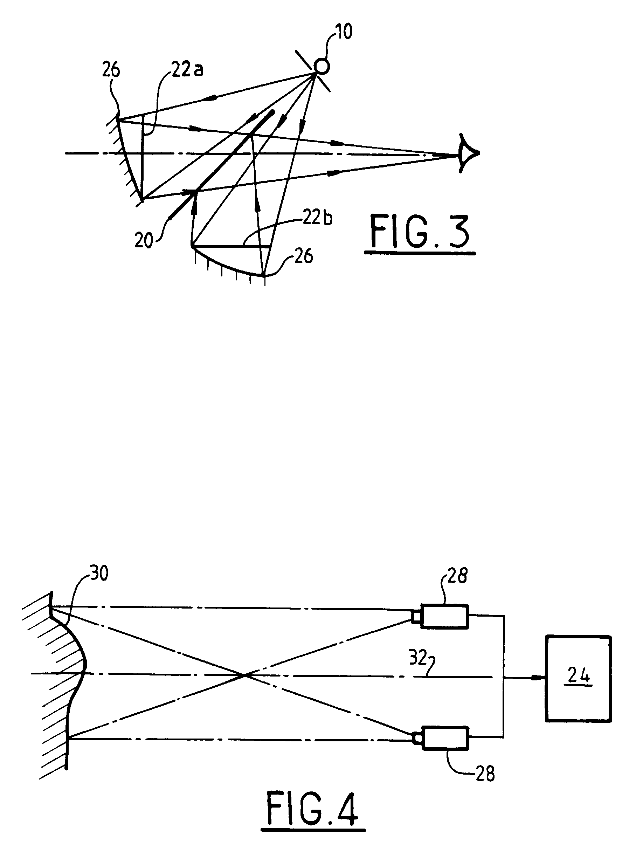

Des surfaces transmissives et non émissives 22a, 22b sont associées aux objectifs 12a, 12b respectivement, en étant disposées de façon appropriée par rapport aux lentilles de ces objectifs, pour servir de support à des vues d'un même objet ou d'une même scène prises sous des angles différents, par exemple au moyen du système représenté schématiquement en figure 4, ou d'une autre façon comme on le verra ci-après.

Dans ces conditions, le flux lumineux émis par la source 10a traverse la vue de l'objet ou de la scène formée sur la surface 22a et l'objectif 12a forme une image correspondante sur un oeil seulement de l'observateur, par exemple son oeil droit. Le flux lumineux émis par la source 10b traverse l'autre vue formée sur la surface 22b, dont l'objectif 12b forme une image sur uniquement l'oeil gauche de l'observateur, ce qui génère pour ce dernier une vision en relief de l'objet ou de la scène dont les vues sont formées sur les surfaces 22a, 22b.

Avantageusement, les surfaces 22a, 22b peuvent être constituées par des écrans à cristaux liquides, qui sont du type transmissif et sur lesquels on peut former des images, par exemple des images de synthèse au moyen d'un système informatique 24 approprié du type CAO ou analogue, ou des images vidéo, le système 24 étant alors alimenté par le dispositif représenté en figure 4.

Dans la variante de réalisation représentée en figure 3, le dispositif ne comprend qu'une source lumineuse 10 et des miroirs 26, par exemple sphériques, qui permettent de former deux images distinctes de la source lumineuse 10, ces images jouant le rôle des sources lumineuses 10a, 10b du mode de réalisation de la figure 1.

On retrouve, dans la représentation schématique simplifiée de la figure 3, les surfaces 22a, 22b sur lesquelles on forme les vues de l'objet ou d'une scène, et la plaque semi-transparente 20 placée à l'intersection des axes des deux systèmes optiques.

Comme représenté en figure 4, les vues qui sont formées sur les surfaces 22a, 22b, peuvent être des images vidéo fournies par deux caméras vidéo 28, qui visent une même scène ou un même objet 30 et qui sont agencées symétriquement de part et d'autre d'un axe commun 32, les caméras vidéo 28 étant commandées en synchronisme et leurs axes optiques étant sensiblement parallèles. Les sorties des caméras 28 alimentent le système 24 précité de commande des écrans 22 à cristaux liquides.

L'agrément d'utilisation d'un dispositif selon l'invention dépend de la précision du positionnement des yeux de l'observateur aux emplacements où sont formées les images des sources lumineuses. Ce positionnement n'est pas trop critique, l'observateur pouvant bouger la tête de plusieurs centimètres dans toutes les directions sans cependant cesser de percevoir le relief des images formées sur ses yeux.

Par ailleurs, on peut augmenter le nombre de systèmes optiques d'un dispositif selon l'invention, et augmenter simultanément le nombre des angles de prise de vues, ce qui permet à un observateur une vision en relief d'un objet ou d'une scène avec des angles différents quand il place sa tête dans des positions différentes.

Il est également possible d'utiliser des surfaces 22 réflectrices à la place des surfaces 22 transmissives, l'adaptation des moyens décrits étant évidente pour l'homme du métier.

On peut également, comme représenté schématiquement en figures 1 et 2, disposer une optique de collimation 34 entre la lame 20 et l'emplacement 14 des yeux de l'observateur, cette optique 34 permettant de présenter les images des objets à l'infini, ce qui améliore le confort d'observation et permet de regarder les surfaces 22a, 22b et l'espace environnant sans effort d'accomodation.

## Revendications

1. Procédé de génération d'images à vision stéréoscopique, pour un observateur placé en une zone déterminée, à partir de vues d'un même objet ou d'une même scène prises sous des angles différents, caractérisé en ce qu'il consiste à former ces vues sur des surfaces (22a, 22b) transmissives ou réflectrices mais non émissives, à les éclairer par des sources lumineuses distinctes (10a, 10b) et à former des images de ces sources en des emplacements possibles des yeux (16) de l'observateur se trouvant dans la zone précitée, les images des sources (10a, 10b) étant décalées aux emplacements précités de sorte qu'une image d'une vue éclairée par une source (10a ou 10b) est formée sur un oeil (16) de l'observateur et qu'une image d'une autre vue éclairée par une autre source (10b ou 10a) est formée sur l'autre oeil (16) de l'observateur.

2. Procédé selon la revendication 1, caractérisé en ce qu'il consiste à utiliser différentes sources lumineuses (10a, 10b) pour éclairer les vues précitées, les images de ces sources étant formées distinctement les unes des autres aux emplacements possibles précités des yeux (16) de l'observateur.

3. Procédé selon la revendication 1, caractérisé en ce qu'il consiste à utiliser une seule source lumineuse (10) et à partager le faisceau lumineux émis par cette source en plusieurs faisceaux distincts les uns des autres pour éclairer les vues précitées.

4. Procédé selon l'une des revendications précédentes, caractérisé en ce que lesdites vues sont générées par calcul à partir de données enregistrées dans un système de traitement de l'informatique.

5. Procédé selon l'une des revendications 1 à 3, caractérisé en ce que lesdites vues sont générées par des caméras vidéo (28) décalées.

6. Procédé selon l'une des revendications précédentes, caractérisé en ce qu'il consiste à former lesdites vues sur des écrans à cristaux liquides (22a, 22b).

7. Dispositif pour générer des images à vision stéréoscopique, pour un observateur placé en une zone déterminée, à partir de vues d'un même objet ou d'une même scène prises sous des angles différents, caractérisé en ce qu'il comprend au moins deux systèmes optiques de formation d'images desdites vues en des emplacements possibles des yeux (16) de l'observateur quand celui-ci est dans ladite zone (14), ces systèmes optiques ayant des axes (18a, 18b) d'orientation différente et comprenant chacun une source lumineuse (10a, 10b), un objectif (12a, 12b) d'imagerie de la source en un emplacement possible d'un oeil (16) de l'observateur, et une surface (22a, 22b) transmissive ou réflectrice, mais non émissive, associée à l'objectif et sur laquelle est formée une vue précitée, ce dispositif comprenant également une lame semi-transparente (20) qui est placée entre lesdits systèmes optiques et les emplacements précités des yeux de l'observateur, dans la zone d'intersection des axes des systèmes optiques pour être traversée par le flux lumineux provenant de l'un de ces systèmes et réfléchir le flux lumineux provenant de l'autre système.

8. Dispositif selon la revendication 7, caractérisé en ce que les sources lumineuses (10a, 10b) sont décalées transversalement par rapport aux axes desdits systèmes optiques.

9. Dispositif selon la revendication 7 ou 8, caractérisé en ce qu'il comprend une seule source lumineuse (10 et des miroirs (26) par exemple sphériques, recevant chacun une fraction du flux lumineux émis par la source et formant des images distinctes de celle-ci pour éclairer les vues précitées.

10. Dispositif selon l'une des revendications 7 à 9, caractérisé en ce que lesdites surfaces (22a, 22b) sont des écrans à cristaux liquides.

11. Dispositif selon l'une des revendications 7 à 10, caractérisé en ce qu'il comprend une optique de collimation (34) placée entre la lame semi-transparente (20) et les emplacements des yeux de l'observateur.

12. Dispositif selon l'une des revendications 7 à 11, caractérisé en ce qu'il comprend des moyens informatiques (24) de calcul, de génération, ou de traitement des vues formées sur lesdites surfaces.

13. Dispositif selon l'une des revendications 7 à 11, caractérisé en ce qu'il comprend des caméras vidéo (28) produisant les vues formées sur lesdites surfaces.

14. Dispositif selon l'une des revendications 7 à 13, caractérisé en ce qu'il fait partie d'un système de CAO ou analogue, de télé-pilotage ou de télé-manipulation.
